# EUROPÄISCHE PATENTSCHRIFT

(11) **EP 1 060 493 B1**
(45) Veröffentlichungstag und Bekanntmachung des Hinweises auf die Patenterteilung: **20.03.2002**
(21) Anmeldenummer: 99907454.5
(22) Anmeldetag: 29.01.1999
(51) Int. Cl.: H01H 71/02, H02B 1/052

(54) **SCHUTZEINRICHTUNG FÜR EIN ELEKTROENERGIESYSTEM**
PROTECTION DEVICE FOR AN ELECTRIC ENERGY SYSTEM
DISPOSITIF DE PROTECTION POUR SYSTEME D'ENERGIE ELECTRIQUE

(30) Priorität: 05.03.1998 DE 19809293
(43) Veröffentlichungstag der Anmeldung: 20.12.2000
(73) Patentinhaber: Moeller GmbH, 53115 Bonn (DE)
(72) Erfinder: KREUZIGER, Volker, D-53343 Wachtberg (DE); GRÜL, Klaus, D-53347 Alfter (DE)
(86) Internationale Anmeldenummer: EP9900586
(87) Internationale Veröffentlichungsnummer: WO9945556

(56) Entgegenhaltungen:
- DE-A- 3 328 922
- DE-A- 3 401 062
- DE-A- 19 627 295
- DE-U- 7 632 087
- FR-A- 2 734 662

## Beschreibung

### Technisches Gebiet

Die Erfindung betrifft eine Schutzeinrichtung für ein Elektroenergiesystem nach dem Oberbegriff des Anspruches 1. Derartige Schutzeinrichtungen dienen beispielsweise zur Ermittlung von Überströmen, wobei ein Sensor einen oder mehrere Stromwandler umfaßt. Die von dem Sensor erzeugten elektrischen Signale werden einer elektronischen Auswerteeinheit zugeführt und dort weiterverarbeitet. Treten Überströme auf, erzeugt die Auswerteeinheit entsprechende Schaltsignale, mit denen z.B. ein Schütz zur Unterbrechung des Motorstromes eines Drehstrommotors angesteuert werden kann.

### Stand der Technik

Bei diesen bekannten Schutzeinrichtungen sind die jeweilige Sensoreinheit und die entsprechende elektronische Auswerteeinheit üblicherweise in dem gleichen Gehäuse angeordnet, welches z.B. mit Hilfe einer Schnappverbindung im Bereich der zu kontrollierenden Motor-Stromleitungen auf einer vorhandenen Tragschiene befestigbar ist. Nachteilig ist bei den bekannten Schutzeinrichtungen unter anderem, daß, je nach Richtung der zu überwachenden Stromschienen, nicht immer eine blickrichtige Montage der Schutzeinrichtung möglich ist. Vielmehr kommt es nicht selten vor, daß der Kopf der die Schutzeinrichtung überwachenden Person beim Ablesen des Anzeigenfeldes der Auswerteeinheit um 90° gedreht werden muß. Außerdem hat es sich als nachteilig erwiesen, daß die gesamte Schutzeinrichtung einschließlich der elektronischen Auswerteeinheit zur Messung unterschiedlicher Strommeßbereiche ausgewechselt werden muß, weil die Sensoren jeweils nur für einen relativ kleinen zu überwachenden Strombereich ausgelegt werden können.

Aus der DE 196 27 295 A1 ist eine aus einem Verstärkerbaustein und einem elektrischen Schütz bestehende Schutzeinrichtung bekannt, bei welcher an dem Verstärkerbaustein eine Tragschiene angeordnet ist, in die rückseitige Mittel zur Tragschienenbefestigung am Verstärkerbaustein eingreifen, so daß der Verstärkerbaustein und das Schütz als gemeinsame Einheit, z.B. auf einer weiteren Tragschiene, befestigt werden können. Allerdings besteht auch bei dieser Schutzeinrichtung der Nachteil, daß in Abhängigkeit von der Leitungsführung des Netzes der Kopf beim Ablesen von an den Baueinheiten gegebenenfalls angezeigten Informationen gedreht werden muß. Aus der DE 34 01 062 A1 ist ein einteiliges elektrisches Gerät bekannt, das in zwei um 90° gegeneinander gedrehten Positionen auf einer Tragschiene zu befestigen ist, wofür die Befestigungselemente an der Unterseite des Gerätes entsprechend gestaltet sind.

### Darstellung der Erfindung

Der Erfindung liegt daher die Aufgabe zugrunde, eine Schutzeinrichtung der eingangs erwähnten Art anzugeben, die weitgehend unabhängig von der Leitungsführung des entsprechenden Netzes eine blickrichtige Montage der mit einem Anzeigenfeld versehenen elektronischen Auswerteeinheit ermöglicht.

Ausgehend von einer Schutzeinrichtung der eingangs genannten Art wird die Aufgabe erfindungsgemäß durch die kennzeichnenden Merkmale des unabhängigen Anspruches gelöst, während den Unteransprüchen vorteilhafte Weiterbildungen der Erfindung zu entnehmen sind.

Die Erfindung beruht im wesentlichen auf dem Gedanken, daß einerseits die Sensoreinheit und die Auswerteeinheit in getrennten Gehäusen untergebracht sind und daß andererseits an dem Gehäuse der Sensoreinheit eine umlaufende Tragschiene derart angeordnet ist, daß das Gehäuse der Auswerteeinheit mittels einer Schnappverbindung in zwei um 90° gedrehten Positionen an der Tragschiene befestigbar ist. Ein weiterer wesentlicher Vorteil der erfindungsgemäßen Schutzeinrichtung besteht darin, daß die Schutzeinrichtung derart ausgebildet werden kann, daß bei Messungen in unterschiedlichen Strombereichen lediglich der Sensor ausgetauscht werden muß. Die elektronische Auswerteeinheit kann hingegen auf einfache Weise derart aufgebaut werden, daß sie mit unterschiedlichen Sensoren betrieben werden kann.

Bei der Sensoreinheit handelt es sich vorzugsweise um eine Stromwandlervorrichtung. Mit Vorteil ist das Gehäuse der Sensoreinheit auf seiner der Auswerteeinheit abgewandten Seite ebenfalls mit einer Schnappeinrichtung zur Befestigung der gesamten Schutzeinrichtung an einer entsprechenden weiteren Tragschiene versehen ist. Die Tragschienen sind zweckmäßig mit Hutschienenprofil ausgebildet.

### Kurze Beschreibung der Zeichnungen

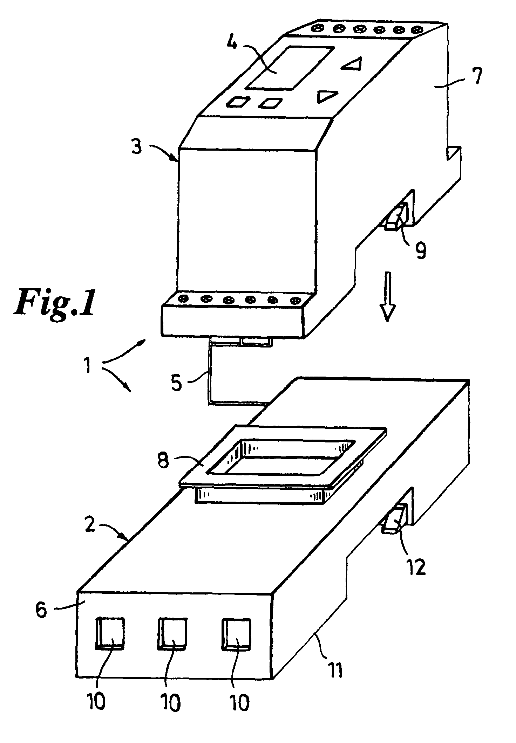

Weitere Einzelheiten und Vorteile der Erfindung ergeben sich aus dem folgenden, anhand einer Zeichnung erläuterten Ausführungsbeispiel. Darin zeigt die einzige Figur 1 eine perspektivische Darstellung einer Ausführungsform der erfindungsgemäßen Schutzeinrichtung.

### Bester Weg zur Ausführung der Erfindung

In der Fig. 1 ist mit 1 eine Schutzeinrichtung bezeichnet, mit der Schaltsignale zur Ansteuerung eines nicht dargestellten Schützes zum Schalten der Ströme eines aus Gründen der Übersichtlichkeit ebenfalls nicht dargestellten Drehstrommotors erzeugt werden. Die Schutzeinrichtung 1 besteht im wesentlichen aus einer Sensoreinheit 2 und einer elektronischen Auswerteeinheit 3 mit einem Anzeigenfeld 4 (z.B. LCD-Display zur Anzeige des gemessenen Stromes, eines Phasenausfalles, eines Fehlerstromes etc.). Sensoreinheit 2 und Auswerteeinheit 3 sind elektrisch über eine Leitung 5 miteinander verbunden. Sowohl der Sensoreinheit 2 als auch der Auswerteeinheit 3 ist jeweils ein eigenes Gehäuse 6, 7 aus Metall oder aus Kunststoff zugeordnet, die mechanisch über eine Schnappverbindung miteinander verbindbar sind. Hierzu ist erfindungsgemäß an dem Gehäuse 6 der Sensoreinheit 2 eine umlaufende Hutschiene 8 angeordnet, derart, daß das Gehäuse 7 der elektronischen Auswerteeinheit 3 mittels einer Schnappeinrichtung 9 wahlweise in zwei um 90° gedrehten Positionen an der Hutschiene 8 befestigbar ist. Die Sensoreinheit 2 weist drei mit 10 bezeichnete Öffnungen auf, durch welche die zu überwachenden Stromleitungen des Drehstrommotors hindurch geführt werden. Die durch diese Stromleitungen fließenden Ströme werden dann mit Hilfe im Inneren des Sensorgehäuses 6 angeordneter und an sich bekannter schleifenförmiger Stromwandler (z.B. Rogowski-Spulen) gemessen und die Meßsignale über die elektrische Leitung 5 der Auswerteeinheit 3 zugeführt. Das Gehäuse 6 der Sensoreinheit 2 ist auf seiner der Auswerteeinheit 3 abgewandten Seite 11 ebenfalls mit einer Schnappeinrichtung 12 versehen, um die Schutzeinrichtung 1 auf einer nicht dargestellten Hutschiene, z.B. im Bereich der zu überwachenden Stromleitungen des Drehstrommotors, zu befestigen.

Die Erfindung ist selbstverständlich nicht auf das vorstehend beschriebene Ausführungsbeispiel beschränkt. So müssen beispielsweise die Tragschienen nicht zwingend hutschienenförmig ausgebildet sein, sondern können auch andere gleichwirkende Querschnittskonturen, z.B. eine schwalbenschwanzförmige Querschnittskontur aufweisen.

## Patentansprüche

1. Schutzeinrichtung für ein Elektroenergiesystem, mit einer Sensoreinheit (2) und einer mit einem Anzeigenfeld (4) versehenen elektronischen Auswerteeinheit (3), **gekennzeichnet durch** die folgenden Merkmale:
• sowohl der Sensoreinheit (2) als auch der Auswerteeinheit (3) ist jeweils ein eigenes Gehäuse (6,7) zugeordnet;
• das Gehäuse (6) der Sensoreinheit (2) ist mechanisch über eine Schnappverbindung mit dem Gehäuse (7) der Auswerteeinheit (3) verbindbar und
• an dem Gehäuse (6) der Sensoreinheit (2) ist eine umlaufende Tragschiene (8) angeordnet, derart, daß das Gehäuse (7) der Auswerteeinheit (3) mittels einer Schnappeinrichtung (9) in zwei um 90° gedrehten Positionen an der Tragschiene (8) befestigbar ist.

2. Schutzeinrichtung nach Anspruch 1, **dadurch gekennzeichnet, daß** es sich bei der Sensoreinheit (2) um eine Stromwandlervorrichtung handelt.

3. Schutzeinrichtung nach Anspruch 1 oder 2, **dadurch gekennzeichnet, daß** das Gehäuse (6) der Sensoreinheit (2) auf seiner der Auswerteeinheit (3) abgewandten Seite (11) ebenfalls mit einer Schnappeinrichtung (12) zur Befestigung der gesamten Schutzeinrichtung (1) an einer entsprechenden weiteren Tragschiene versehen ist.

4. Schutzeinrichtung nach einem der Ansprüche 1 bis 3, **dadurch gekennzeichnet, daß** die Tragschienen (8) hutschienenprofilförmig ausgebildet sind.

## Claims

1. Protective device for an electrical power system, having a sensor unit (2) and having an electronic evaluation unit (3) provided with a display area (4), **characterized by** the following features:
• both the sensor unit (2) and the evaluation unit (3) each have their own associated housing (6, 7);
• the housing (6) of the sensor unit (2) can be mechanically connected via a snap-action connection to the housing (7) of the evaluation unit (3), and
• a circumferential mounting rail (8) is arranged on the housing (6) of the sensor unit (2) such that the housing (7) of the evaluation unit (3) can be mounted by means of a snap-action device (9) on the mounting rail (8) in two positions rotated through 90°.

2. Protective device according to Claim 1, **characterized in that** the sensor unit (2) is a current transformer apparatus.

3. Protective device according to Claim 1 or 2, **characterized in that** the housing (6) of the sensor unit (2) is likewise provided, on its side (11) facing away from the evaluation unit (3), with a snap-action device (12) for mounting the whole protective device (1) on a corresponding further mounting rail.

4. Protective device according to one of Claims 1 to 3, **characterized in that** the mounting rails (8) are in the form of top-hat profiled rails.

## Revendications

1. Dispositif de protection pour système d'énergie électrique, comportant un module capteur (2) et un module d'interprétation électronique (3) muni d'un afficheur (4), **caractérisé par** les caractéristiques suivantes :
* un boîtier (6, 7) est à chaque fois associé au module capteur (2) ainsi qu'au module d'interprétation (3) ;
* le boîtier (6) du module capteur (2) peut être relié mécaniquement au boîtier (7) du module d'interprétation (3) par le biais d'un assemblage par enclenchement et
* un rail support périphérique (8) est disposé sur le boîtier (6) du module capteur (2) de manière à ce que le boîtier (7) du module d'interprétation (3) puisse être fixé sur le rail support (8) dans deux positions décalées de 90° au moyen d'un dispositif d'enclenchement (9).

2. Dispositif de protection selon la revendication 1, **caractérisé en ce que** le module capteur (2) est un dispositif transformateur de courant.

3. Dispositif de protection selon la revendication 1 ou 2, **caractérisé en ce que** le côté (11) du boîtier (6) du module capteur (2) qui est opposé au module d'interprétation (3) est également muni d'un dispositif d'enclenchement (12) pour fixer l'ensemble du dispositif de protection (1) à un autre rail support correspondant.

4. Dispositif de protection selon l'une des revendications 1 à 3, **caractérisé en ce que** les rails supports (8) sont réalisés sous la forme de rails à profilé en chapeau.
